(19) Europäisches Patentamt

European Patent Office

Office européen des brevets

(11) EP 1 617 612 A1

(12) EUROPEAN PATENT APPLICATION
published in accordance with Art. 158(3) EPC

(43) Date of publication:
18.01.2006 Bulletin 2006/03

(51) Int Cl.:
H04L 27/18 (1968.09)     H04B 14/02 (1985.01)

(21) Application number: 04733162.4

(22) Date of filing: 14.05.2004

(86) International application number:
PCT/JP2004/006860

(87) International publication number:
WO 2004/102912 (25.11.2004 Gazette 2004/48)

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 14.05.2003  JP 2003136610
12.11.2003  JP 2003382985

(71) Applicant: MATSUSHITA ELECTRIC INDUSTRIAL
CO., LTD.
Kadoma-shi, Osaka 571-8501 (JP)

(72) Inventors:
• OTA, Genichiro
Kanagawa 238-0246 (JP)
• INOGAI, Kazunori
Yokohama-shi,
Kanagawa 236-0032 (JP)

(74) Representative: Grünecker, Kinkeldey,
Stockmair & Schwanhäusser
Anwaltssozietät
Maximilianstrasse 58
D-80538 München (DE)

(54) MODULATION METHOD, MODULATION APPARATUS, DEMODULATION APPARATUS, AND RADIO COMMUNICATION SYSTEM

(57) First and second quadrature modulators 109, 110 carry out quadrature modulation on Nyquist signals given a delay difference corresponding to 2/4 of their respective symbol periods using a cosine wave having a frequency corresponding to an odd-number multiple of the basic frequency of each Nyquist signal as a carrier. Third quadrature modulator 113 carries out quadrature modulation on the modulated signal obtained from first quadrature modulator 109 and the modulated signal obtained from second quadrature modulator 110 using a carrier having a predetermined frequency. Thus, it is possible to obtain modulated signals with four Nyquist signals allocated in a 1-symbol period T without any interference with one another.

100 MODULATION APPARATUS

FIG.12

**Description**

Technical Field

The present invention relates to a modulation method, modulation apparatus, demodulation apparatus and radio communication system for improving frequency utilization efficiency.

Background Art

The widespread proliferation of information processing technologies and the rapid progress of a so-called IT (Information Technology) society in recent years have increased demands for information communication and expanded information communication remarkably. There is a strong demand for speed enhancement and wireless communications not only between societies but also in the communication infrastructure connecting individuals and societies. Such an increasing demand for mobile communications may exhaust even abundant frequency resources.

To solve this problem, spatial multiplexing communication in a natural space called "MIMO (Multi Input Multi Output)" is currently under study. However, such a sophisticated communication structure using a momentarily varying propagation environment requires an enormous amount of signal processing at not only base stations but also at individual terminal devices, causing an increase in power consumption and increase in device size, weight and cost. Therefore, as a practical method for solving this problem, great expectations are placed on an improvement of the modulation efficiency in baseband.

The current modulation scheme for mobile communications is predominantly based on quadrature modulation called "digital communication," which can obtain the highest frequency utilization efficiency at present. What is at a peak thereof is quadrature amplitude modulation (QAM). When a communication is carried out using this modulation scheme in a mobile environment, 16QAM is the maximum under the influence of multipath fading with high-speed fluctuations and 4 bits/sec/2 Hz, that is, 2 bits/sec/Hz, is a peak.

A study to secure the highest possible degree of independency for this communication and further improve the frequency utilization efficiency using a plurality of propagation paths through a plurality of antennas is underway. For example, different items of information can be sent at the same frequency by using vertical polarization and horizontal polarization, and therefore if 16QAM is used for each polarization, it is theoretically possible to achieve frequency utilization efficiency of maximum 4 bits/sec/Hz. However, in a reflected wave or mobile environment, signal processing for making full use of the orthogonality (independency) of vertical polarization and horizontal polarization on the receiving side results in a great burden equivalent to having twice as many apparatuses as those described so far.

Likewise, a study pursuing an N-fold transmission rate using N antennas is also underway, but it goes without saying that it is difficult to completely secure the independency of N propagation paths.

Therefore, the first thing to do basically is' to improve the modulation efficiency in a baseband, instead of using a momentarily varying propagation environment.

The technological platforms with the enhanced frequency utilization efficiency so far are a technology for utilizing independent signal waves having high-level orthogonality to adjacent signal waves (that is, waves having low-level interference with adjacent signal symbols) called a "Nyquist theory" and a technology for reducing inter-code interference with adjacent signal waves called "partial response" or "wavelet." This type of technology is disclosed, for example, in Unexamined Japanese Patent Publication No.1988-92143.

A most typical example of the Nyquist theory is expressed by sin(x)/x. The function expressing this signal is called a "sinc function." The sinc function is an independent wave and results in zero crossing at signal points of adjacent signal waves, causing no interference against the adjacent signals.

In conventional communications, it is phase modulation (PSK) and quadrature amplitude modulation (QAM) that regard x of sin(x)/x as a time-axis variable, while it is orthogonal frequency division multiplexing communication (OFDM) that regards x of sin (x)/x as a frequency-axis variable. The time axis and the frequency axis are physically orthogonal to each other, and, therefore, assuming that one is primary modulation and the other secondary modulation, it is possible to adopt, for example, 16QAM-OFDM. This modulation method achieveshigh-level communication effects such as keeping high frequency utilization efficiency and securing mobile communication capability, and so forth.

Here, the conventional digital modulation technology will be explained in detail. One of major objects of digital modulation is to realize high frequency utilizationefficiency. That technology is called a band limiting technology. That is, it refers to a technology for realizing the highest possible information transmission rate in a given frequency bandwidth. In analog transmission performs modulation using the amount of information and it is not only redundant but also leaves little room for compression or modulation intended for efficiency enhancement.

The digital modulation band limiting technology typically commonly adopts a method using a Nyquist filter. The method of using the Nyquist filter is a method in which a Nyquist characteristic is given to symbols to reduce interference between signals (symbols) on the time axis and symbols are embedded at high densities.

In order to prevent interference between signals, zero must be crossed at intervals of the symbol segment. This is referred to as the first Nyquist standard. The filter that satisfies this standard is called a "Nyquist filter." A typical example of realizing this Nyquist filter is a sinc function. Assuming the symbol period is T, a sinc function h (t) is expressed by the following expression:

$$h\ (t)\ =\ \sin(\pi t/T)/(\pi t/T)\ \ldots\ldots\ (1)$$

When this Nyquist filter is made up of a digital filter, a baseband input signal (symbol) is captured by quadruple oversampling.

Here, the degree of band limiting by the Nyquist filter is determined by the roll-off rate. The roll-off rate takes a value between 0 and 1. For example, when the roll-off rate is 0.5, the required bandwidth becomes 1.5 times the transmission rate. For this reason, the roll-off rate is preferably set to 0 in order to increase the frequency utilization efficiency.

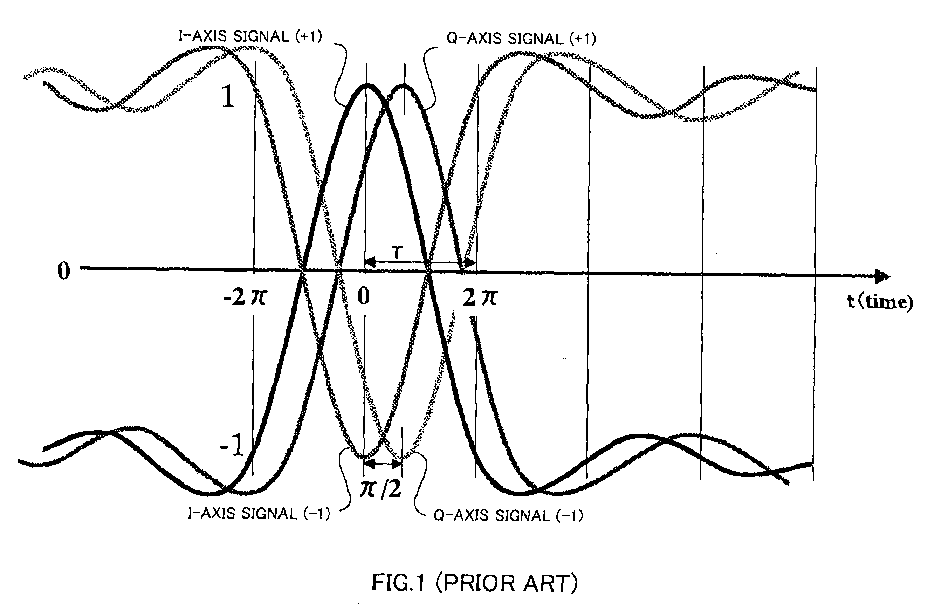

FIG.1 shows the principle of conventional digital quadrature modulation (QPSK). Since an I-axis signal is carried on a cosine carrier, the signal point, that is, the vertex of a Nyquist wave is placed at phase 0. A Q-axis signal is carried on a sine carrier, and therefore the signal point, that is, the vertex of a Nyquist wave is placed at phase π/2. With regard to the I-axis signal, assuming that it has upward convex polarity when an information signal is "1", it is placed at the waveform position shown as the I-axis signal (+1). The I-axis signal becomes downward convex when the information signal is "0" or "-1," and therefore it is placed at the wave form position shown as the I-axis signal (-1) in FIG.1.

Likewise, with regard to the Q-axis signal, assuming that it has upward convex polarity when an information signal is "1, " it is placed at the waveform position shown as the Q-axis signal (+1) in FIG.1. The Q-axis signal becomes downward convex when the information signal is "0" or "-1," and therefore it is placed at the waveform position shown as the Q-axis signal (-1) in FIG.1.

According to the conventional method, Nyquist waveform becomes completely one during a symbol period T. This is because an NRZ (non-return-to-zero) signal is converted to a Nyquist signal and it becomes Null in the marginal section of the Nyquist wave, that is, at the position of phase n in the case of the I-axis signal (+1) shown in FIG.1, but the potential does not become null, that is, zero potential. For this reason, it is not possible to place an adjacent symbol at the n position as in the case of OFDM.

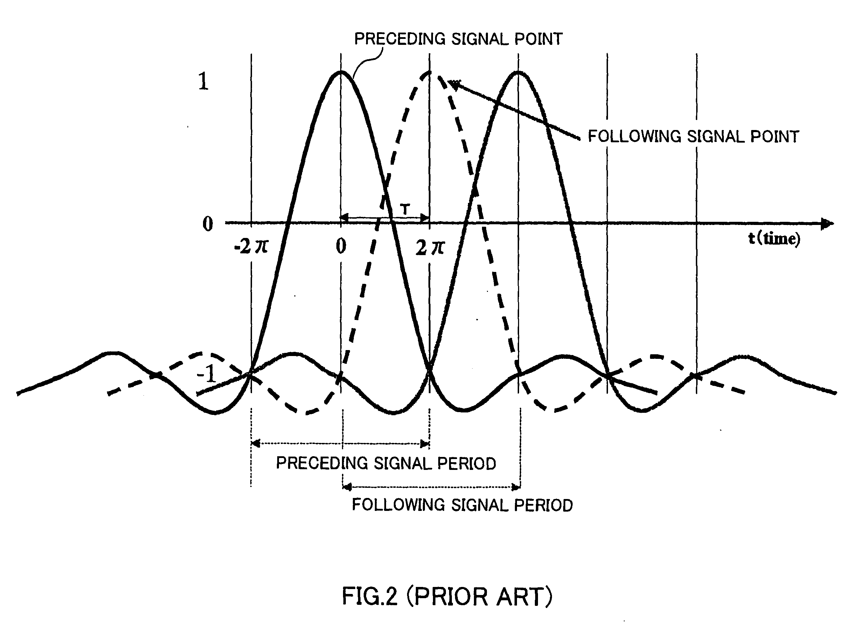

This state is shown in FIG.2. FIG.2 focuses only on the I-axis signal in quadrature modulation. According to the Nyquist theory, symbols should be allowed to be placed at phase intervals of n, but the Null point of the Nyquist wave is not 0 but "-1." For this reason, the signal will completely interfere with Nyquist waves of subsequent adjacent symbols and the combined value becomes 0. That is, symbol allocation to the n phase is impossible from the standpoint of the Nyquist theory.

This is the actual situation of the conventional digital modulation scheme, causing holdback any improvement of the frequency utilization efficiency.

As described above, the conventionally proposed modulation schemes are almost commonly built on the I-Q plane. This plane is two-dimensional. Therefore, information that can be sent in a 1-symbol period is basically 2 bits unless it is multi-valued. At the present, 16QAM is the modulation scheme having the highest frequency utilization efficiency in a high-speed mobile environment. However, in order to transmit a greater amount of information with the limited frequency resources, a modulation scheme with much higher frequency utilization efficiency is expected.

Disclosure of Invention

It is therefore an object of the present invention to provide a modulation method, modulation apparatus, demodulation apparatus and radio communication system capable of improving the frequency utilization efficiency compared to conventional modulation schemes.

This object can be attained by carrying out quadrature modulation on a Nyquist signal of a first input symbol and a Nyquist signal of a second input symbol obtained by giving a delay difference corresponding to an integer multiple of 1/4 of the symbol period of the input symbol to the Nyquist signal of the first input symbol using a cosine wave having a frequency corresponding to an odd-number multiple of the basic frequency of each Nyquist signal as a carrier.

Brief Description of Drawings

FIG.1 illustrates a principle of a conventional digital quadrature modulation (QPSK);

FIG.2 illustrates positions which should be considered for new symbols based on symbol allocation of conventional quadrature modulation and the Nyquist theory;

FIG.3 illustrates a constellation example when new symbols are added according to the present invention;

FIG.4 illustrates multiplexing of Nyquist waves and symbol period;

FIG.5 illustrates a method of arranging QPSK rings according to the present invention;

FIG.6 illustrates signal allocation of modulated waves and a method thereof which form the basis of the present invention;

FIG.7 shows waveform diagrams illustrating modulation of Nyquist waves by carriers;

FIG. 8 is a waveform diagram illustrating a fact that no interference occurs at a T/2 point if the frequency of a carrier is set to an odd-number multiple of its symbol period;

FIG.9 illustrates a fact that a Nyquist waveform can send 2 bits in a symbol segment on the I-axis and Q-axis.

FIG.10 illustrates a case where Nyquist signals are inserted on the I-axis and Q-axis at intervals of n;

FIG.11 illustrates positions on the I-axis and Q-axis respectively according to the present invention where new symbols are inserted;

FIG.12 is a block diagram showing the configuration of a modulation apparatus according to Embodiment 1 of the present invention;

FIG.13 illustrates waveform diagram of modulated signals obtained by the modulation apparatus according to Embodiment 1;

FIG.14 is a block diagram showing the configuration of a demodulation apparatus according to Embodiment 1 of the present invention;

FIG. 15 (a) illustrates a waveform of an input symbol after Nyquist shaping;

FIG.15 (b) illustrates a waveform diagram showing a primary modulation carrier;

FIG.15(c) illustrates a waveform diagram showing a primary modulated waveform when the primary modulation carrier of FIG.15 (b) is modulated with the input symbol of FIG.15(a) by the modulation apparatus according to Embodiment 1;

FIG.16 (a) illustrates an envelope of a secondary modulated wave obtained by the modulation apparatus according to Embodiment 1;

FIG.16 (b) illustrates a spectrum of the secondary modulated wave obtained by the modulation apparatus according to Embodiment 1;

FIG.17 illustrates a simulation result of a comparison of communication quality between the modulated signal obtained by the modulation apparatus according to Embodiment 1 and conventional QPSK and 16QAM;

FIG. 18 illustrates the configuration of a modulation apparatus according to Embodiment 2;

FIG.19 illustrates the configuration of a demodulation apparatus according to Embodiment 2;

FIG.20 illustrates the configuration of a modulation apparatus according to Embodiment 3;

FIG.21 illustrates the configuration of a demodulation apparatus according to Embodiment 3; and

FIG.22 illustrates the configuration a modulation apparatus according to Embodiment 4.

Best Mode for Carrying out the Invention

With reference now to the accompanying drawings, embodiments of the present invention will be explained in detail below.

(Embodiment 1)

First, the background of the present invention and the principle of the present invention will be explained.

The inventors thought that if a four-dimensional space could be constructed on the I-Q plane, information that could be sent in a 1-symbol period would be 4 bits (in the case of QPSK) and the frequency efficiency would be improved two-fold.

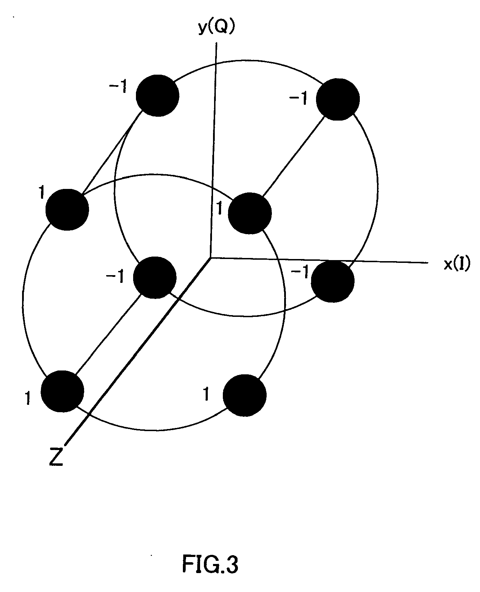

However, it is impossible to place a plurality of QPSK rings on the I-Q plane, and therefore, at least a third axis needs to be provided on the I-Q plane in such a way as to be orthogonal to the I-Q plane as shown in FIG.3. It is a matter of course that the third axis needsto be provided but the question is with what kind of physical quantity the new axis should be created. The present invention assumes that the third axis (Z-axis) is a phase dimension.

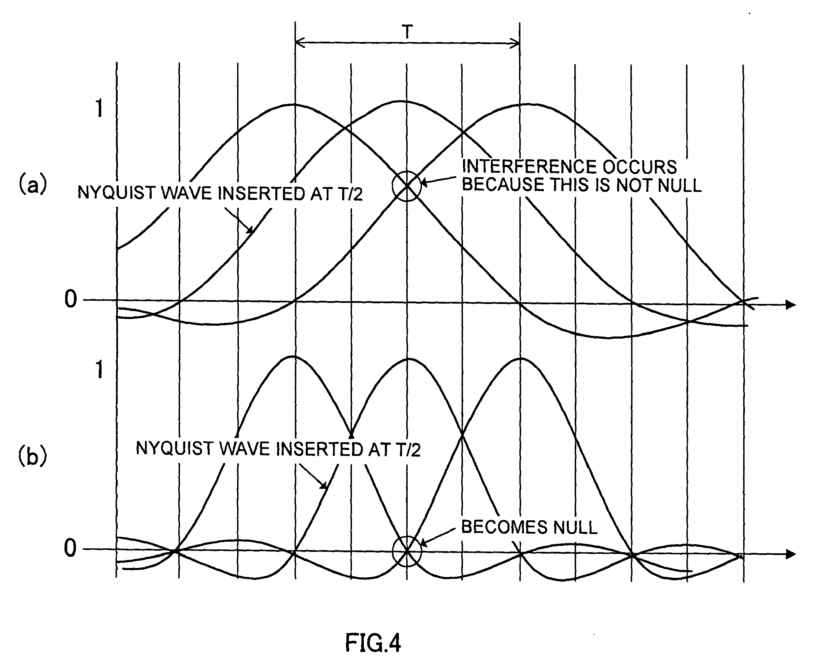

Here, accommodating two QPSK rings in a 1-symbol period means that two Nyquist waves are placed on the I-axis. FIG.4 shows this. The major part of a Nyquist wave consists of two symbol periods and the orthogonality thereof is obtained at intervals of symbol period T. Therefore, to establish the orthogonality at two locations in a 1-symbol period, it is indispensable to reduce the symbol period to 1/2 as shown in FIG.4 (b). Trying to realize this reduction of the symbol period using the conventional method requires a double frequency bandwidth and the only method conceivable for improvement of the frequency utilization efficiency is a conversion to SSB (Single SideBand).

The present invention has been implemented based on such considerations and provides a method for accommodating two Nyquist waves in a 1-symbol period (hereinafter, this will be referred to as "dual QPSK scheme").

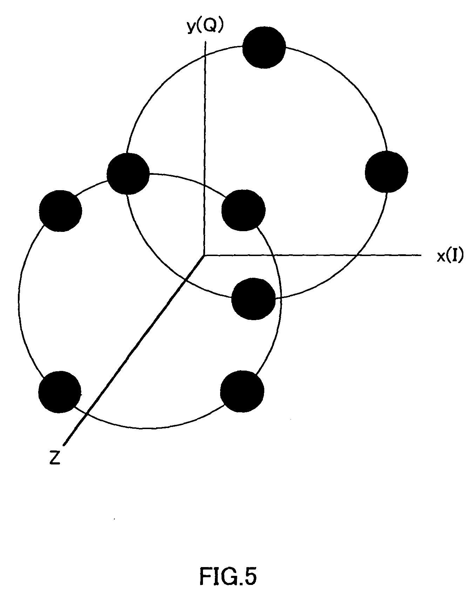

First, the manner in which a QPSK ring is placed under the dual QPSK scheme of the present invention will be explained. The dual QPSK scheme is intended to realize inter-phase multiplexing and if the Z-axis is defined as a phase difference component of phase modulation, its allocation will be as shown in FIG. 5 (however, FIG.5 shows π/2-offset dual QPSK).

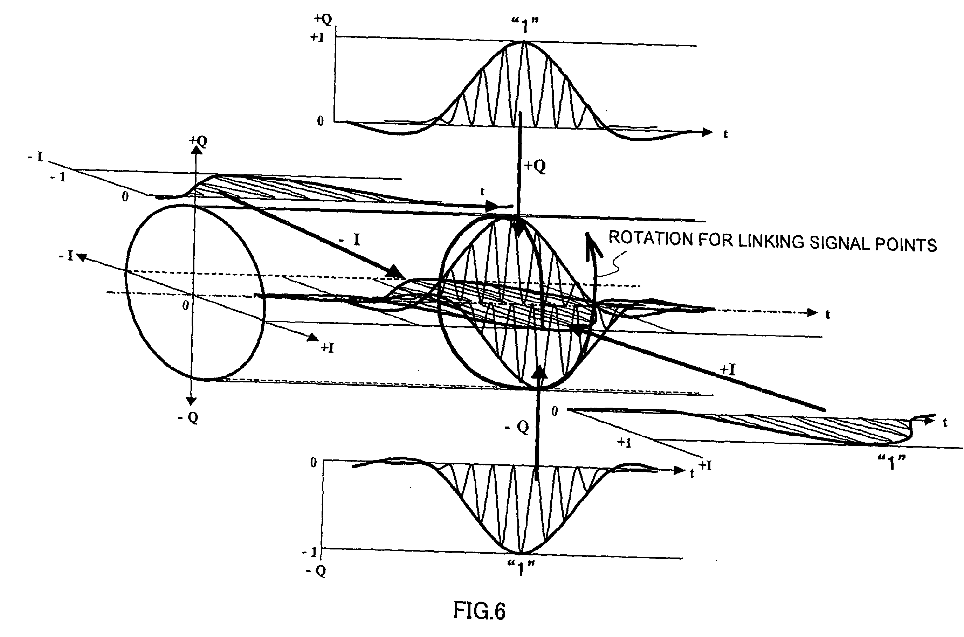

FIG.6 shows a basic concept of the dual QPSK scheme. As is easily understandable from this figure, the scheme according to this embodiment includes four independent envelopes. It becomes a model just like four independent Nyquist wave envelopes pasted onto a cylinder made up of analysis signals making up carriers. To accommodate four Nyquist waves in a 1-symbol period, respective symbol points are arranged with a difference added every 90 degrees.

Explanations will be continued with reference to FIG.4 again. When two Nyquist waves are arranged in a 1-symbol period, no Nyquist wave is conventionally arranged at point T/2 because interference between symbols occurs as shown in FIG. 4 (a). Interference occurs between symbols does not allow Nyquist wave to arrange at point T/2 conventionally as shown in Fig.4. The inventors noticed that modulating Nyquist waves at a specific carrier frequency prevents interference between symbols and have come up with the present invention.

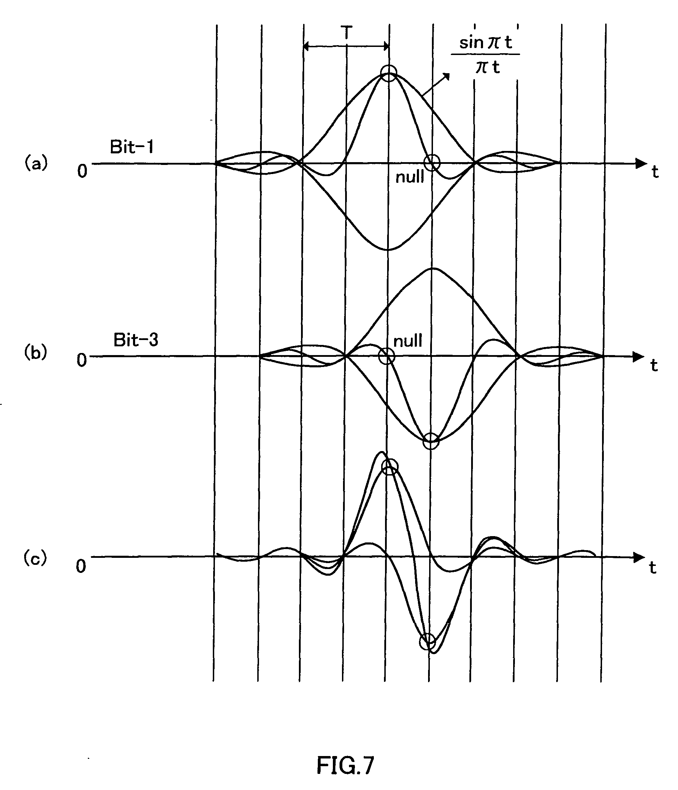

FIG.7 shows the basic concept of embodying the dual QPSK scheme according to the present invention. Both FIGs.7 (a) and (b) show a Nyquist wave having a symbol period T multiplied (modulated) by a cosine wave having a period 2T superimposed on the Nyquist wave. As is obvious from this figure, the modulated waveform is also a Nyquist wave. However, the period becomes 1/2 of the period of the original Nyquist wave. The Nyquist wave can be expressed by a sinc function and the product of the Nyquist wave having the symbol period T and the carrier (cosine wave) having the period 2T is expressed by the following expression:

$$\frac{\sin \frac{\pi t}{T}}{\frac{\pi t}{T}} \times \cos \frac{\pi t}{T} = \frac{\sin \frac{\pi t}{T} \times \cos \frac{\pi t}{T}}{\frac{\pi t}{T}} = \frac{\sin \frac{2\pi t}{T}}{\frac{2\pi t}{T}} = (\sin c(\frac{2\pi t}{T})) \quad \cdots\cdots \quad （2）$$

As is appreciated from Expression (2), the product (modulation output) is also a sinc function and its period is T/2. For this reason, even when the modulated signals are added up, no interference occurs between them. FIG.7(c) shows the combined waveform.

Thus, the first requirement of the present invention is to multiply two Nyquist signals given a delay difference corresponding to an integer multiple of 1/4 of the symbol period by a cosine wave (carrier). This prevents the two Nyquist signals multiplied (that is, modulated) by the cosine wave from interfering with each other.

However, the carrier of the period 2T includes a DC (direct current) area after the modulation, and therefore it is necessary to increase the carrier frequency. However, simply increasing the carrier frequency will cause symbol points of the Nyquist waves to interfere with one another.

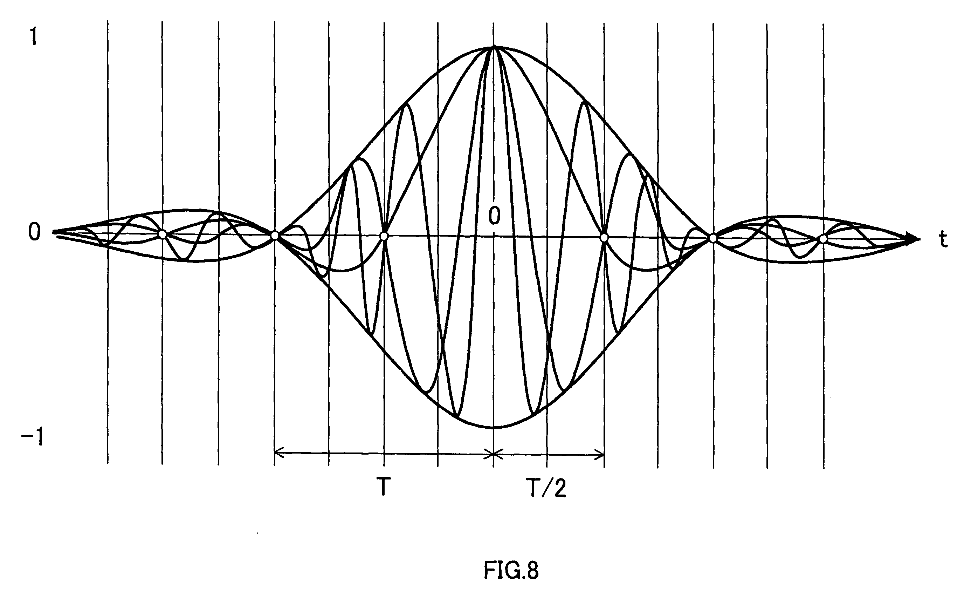

The second requirement of the present invention is to set the frequency of the cosine wave (carrier) to an odd-number multiple of the basic frequency of each Nyquist signal. That is, the period of the cosine wave (carrier) to be multiplied is set to 2T/ (2n+1). FIG.8 shows a waveform when the Nyquist waveform is multiplied by a carrier having a period of 2T/ (2n+1) (example when n=0, 1, 2). As is also clear from FIG.8, odd-number order harmonic waves having basic period of 2T as in the present invention can avoid symbol points of the Nyquist waves arranged at intervals of T/2 from interfering with one another. In this regard, FIG.8 shows cases where the period of the carrier is set to 2T, 2T/3, 2T/5.

That is, the essence of the present invention is to provide a quadrature modulator that carries out quadrature modulation on a Nyquist signal of a first input symbol and a Nyquist signal of a second input symbol having a delay difference corresponding to an integer multiple of 1/4 of a symbol period of an input symbol with respect to the Nyquist signal of the first input symbol using a cosine wave having a frequency corresponding to an odd-number multiple of the basic frequency of each Nyquist signal as a carrier. Providing such a quadrature modulator allows four Nyquist signals to be arranged in a 1-symbol period without any interference among the Nyquist signals even when double quadrature modulation is carried out and allows twice as many symbols as conventional symbols to be accommodated in the same frequency band.

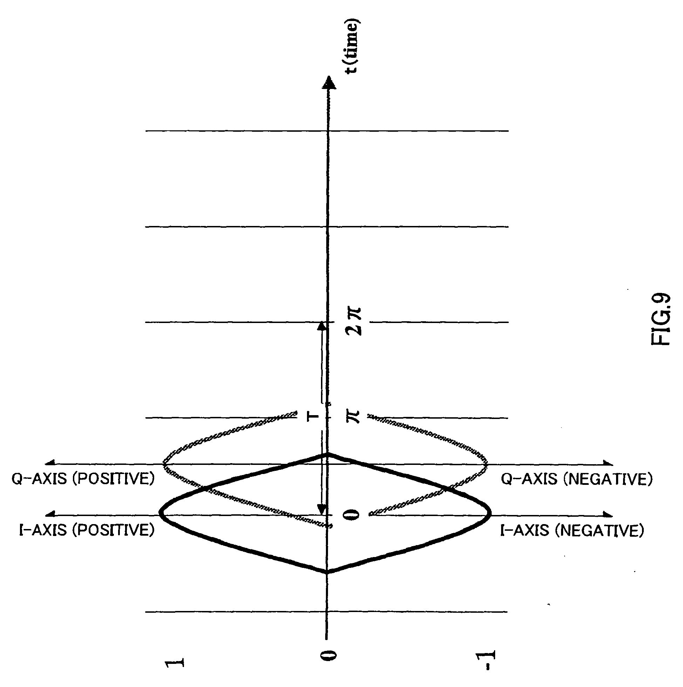

The principle of the present invention will be explained further from a different standpoint. FIG.9 shows that two bits can be sent in a symbol segment on the I-axis and Q-axis using Nyquist waveforms. It is publicly known that the I-axis and Q-axis have a phase difference of π/2 in quadrature modulation.

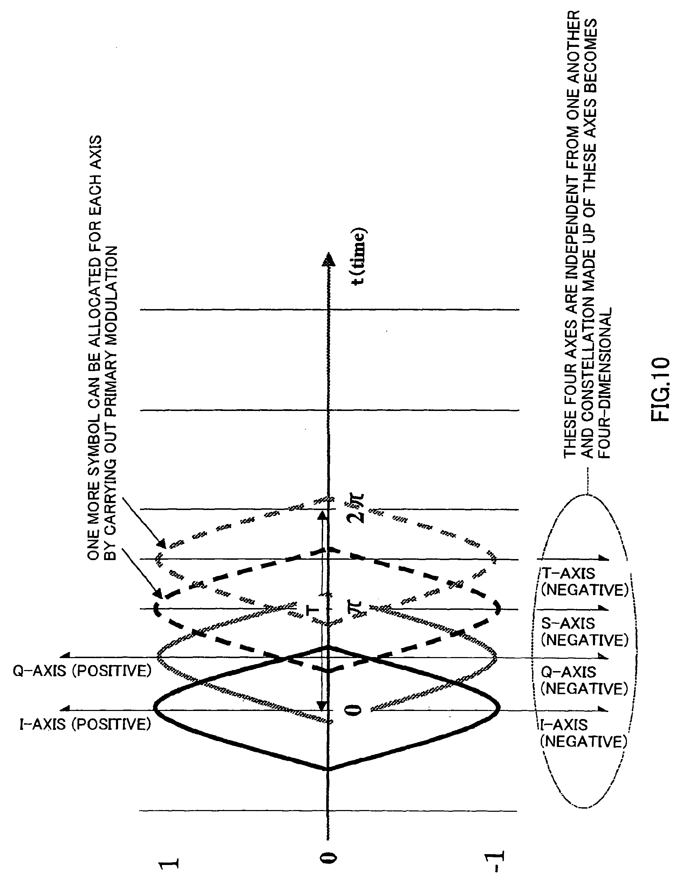

FIG.10 shows that a four-dimensional space is provided when two new axes according to the present invention are added beyond the two-dimensional signal correspondence (constellation) with the conventional I-axis and Q-axis. Note that the four axes of the I-axis (negative), Q-axis (negative), S-axis (negative) and T-axis (negative) in FIG. 10 are independent of one another and the constellation made up of these axes becomes four-dimensional. Moreover, dotted lines in FIG.10 show that primary modulation makes it possible to place also one more symbol for each axis. As shown in the figure, Nyquist signals are inserted at intervals of n on the I-axis and Q-axis. At this time, there is no orthogonality of Nyquist signals between the prior phase points and new phase points, that is, there is no guarantee that the signal become Null at a signal point on the other party.

Thus, as shown in FIG.7, to make it possible to allocate symbol to this new phase point, the present invention gives the symbols orthogonality by multiplying the symbols by a cosine wave (carrier) instead of simply adding conventional symbols and new symbols. Furthermore, as described above, the band is inhabited from expanding by setting the frequency of the cosine wave (carrier) to a frequency which is an odd-number multiple of the basic frequency of each Nyquist signal.

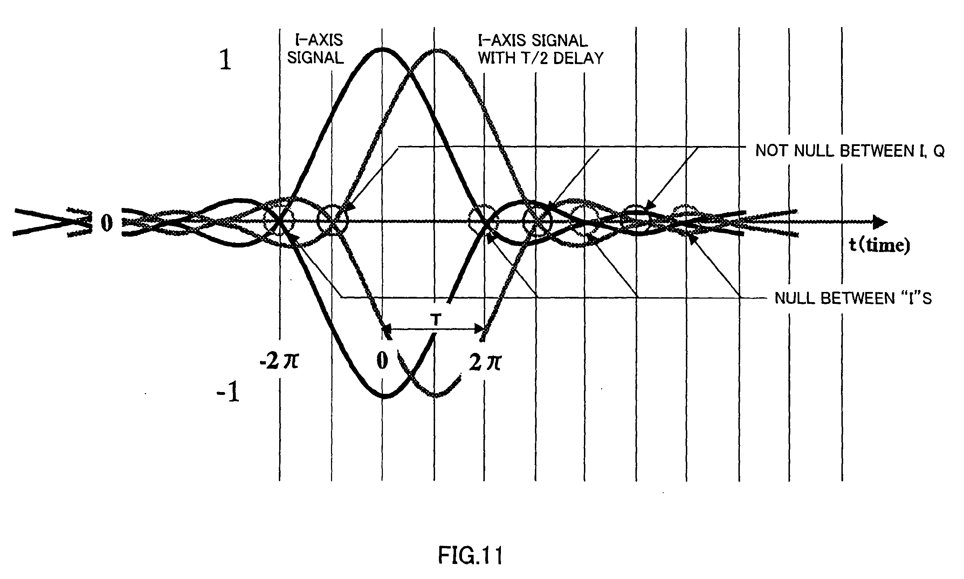

FIG.11 shows positions where new symbols are inserted on the I-axis and Q-axis respectively according to the present invention. As is clear from this figure, the present invention carries out quadrature modulation on two signals having a relationship with a phase difference of n. In other words, the present invention carries out double quadrature modulation.

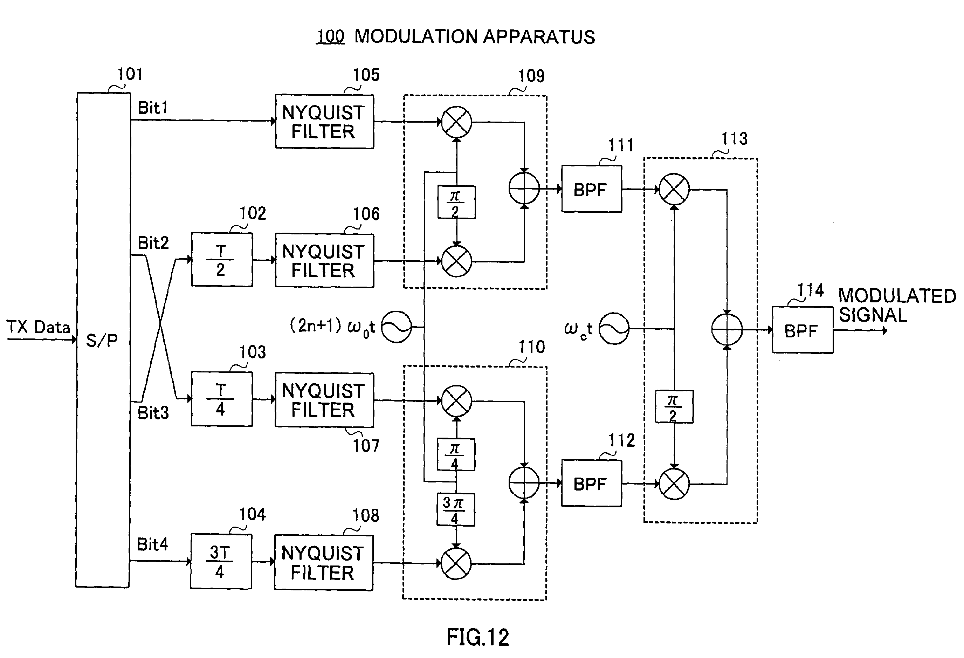

FIG.12 shows the configuration of a modulation apparatus according to Embodiment 1 of the present invention. Modulation apparatus 100 is provided on the transmitting side of a radio communication system. Modulation apparatus 100 is provided with a group of delayers 102, 103, 104 that each add a delay difference obtained by dividing a symbol segment T into four equal portions to four lines of data signals (input symbols) of Bit1, Bit2, Bit3, Bit4, first and second quadrature modulators 109, 110 that receive signals having a delay difference corresponding to 1/2 of the symbol segment T and third quadrature modulator 113 that receives the outputs of the first and second quadrature modulators 109, 110, and applies two-stage quadrature modulation to four lines of information to perform double QPSK processing.

Modulation apparatus 100 converts transmission data (TXData) to four parallel lines of data through serial/parallel conversion circuit (S/P) 101. Then, delayers 102, 103, 104 add a delay difference corresponding to T/4, which is 1/4 of the symbol period T to the parallel bits Bit1, Bit2, Bit3, Bit4 respectively. This causes symbols to be allocated to phase points corresponding to the four equal portions in the symbol segment. That is, symbols are allocated to the positions of phase 0, phase n/2, phase n and phase 3n/2.

Modulation apparatus 100 shapes the four signals after delay processing through Nyquist filters 105, 106, 107, 108 respectively, divides the signals into two groups of 2 signals having a relationship with a delay difference corresponding to T/2 (that is, relationship with a phase difference n) and inputs the signals to first quadrature modulators 109 and second quadrature modulator 110.

First quadrature modulator 109 applies primary modulation to the Nyquist signal with a carrier having a period $2T/(2n+1)$ (n: integer) and thereby combines the two input signals. Likewise, second quadrature modulator 110 applies primary modulation to the Nyquist signal with a carrier having a period $2T/(2n+1)$ (n: integer) and thereby combines the two input signals.

Thus obtained two lines of modulated signals are input to band pass filters (BPF) 111, 112. Band pass filters 111, 112 remove an image signal and spurious component generated through the primary modulation and sends the signal to third quadrature modulator 113 after the filtering.

Third quadrature modulator 113 applies quadrature modulation to the two lines of input modulated signals with a high-order frequency ($\omega_C$) (secondary modulation). The signal after the secondary modulation output from third quadrature modulator 113 is deprived of the image signal and spurious component by band pass filter 114 and sent to a radio propagation path.

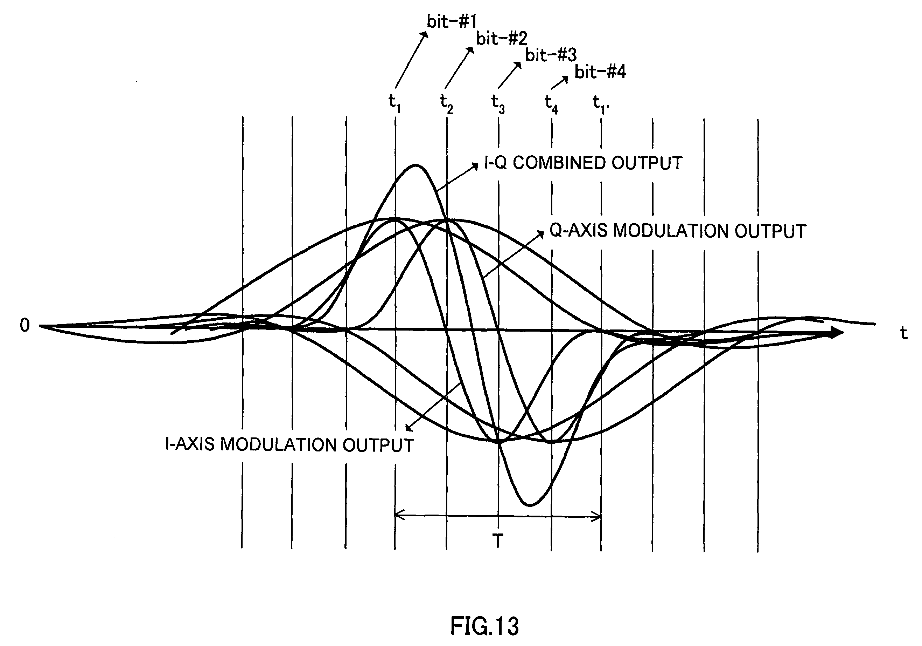

In this way, modulation apparatus 100 obtains a modulated signal accommodating four lines of input signal information as Nyquist waves with a 90-degree difference from one another in a 1-symbol period. FIG.13 shows a conceptual diagram thereof. The combined Nyquist wave accommodating two signals having a T/2 difference exists on the I-axis signal and the combined Nyquist wave which starts with a T/4 difference from the I-axis exists on the Q-axis signal. Signal points of 4 signals are expressed on envelopes of times $t_1$, $t_2$, $t_3$, $t_4$ lined with a time difference of 1/4 of the symbol period T.

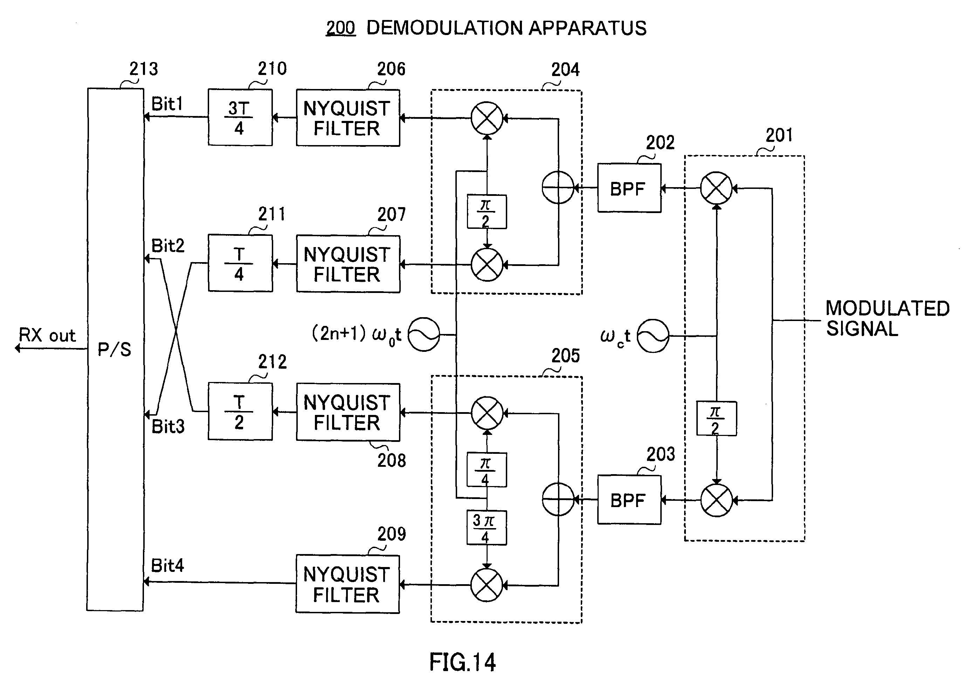

FIG.14 shows the configuration of demodulation apparatus 200 that demodulates a modulated signal formed by modulation apparatus 100. Demodulation apparatus 200 is provided on the receiving side of the radio communication system. Demodulation apparatus 200 inputs the modulated signal to first quadrature demodulator 201. First quadrature demodulator 201 applies quadrature demodulation to the input modulated signal with a high-order frequency ($\omega_C$) and obtains first and second demodulated signals.

These two lines of demodulated signals are input to second and third quadrature demodulators 204, 205 through band pass filters 202, 203. Second and third quadrature demodulators 204, 205 apply quadrature demodulation to the input signals with a carrier having a period $2T/(2n+1)$(n: integer) respectively.

The four lines of demodulated signals output from second and third quadrature demodulators 204, 205 are converted to demodulated bits Bit1, Bit2, Bit3, Bit4 through Nyquist filters 206, 207, 208, 209 and a group of delayers 210, 211, 212 that each add a delay difference obtained by dividing the symbol segment T into four equal portions. The demodulated bits Bit1, Bit2, Bit3, Bit4 are serialized by parallel/serial conversion circuit (P/S) 213 and received data (RXout) is obtained in this way.

In this way, it is possible to demodulate the signal modulated by modulation apparatus 100 satisfactorily and reconstruct the original bits before the modulation using demodulation apparatus 200.

Next, a confirmation of the modulation operation and a simulation of BER carried out in an AWGN environment of a radio communication system provided with modulation apparatus 100 shown in FIG.12 on the transmitting side and demodulation apparatus 200 shown in FIG.14 on the receiving side will be described.

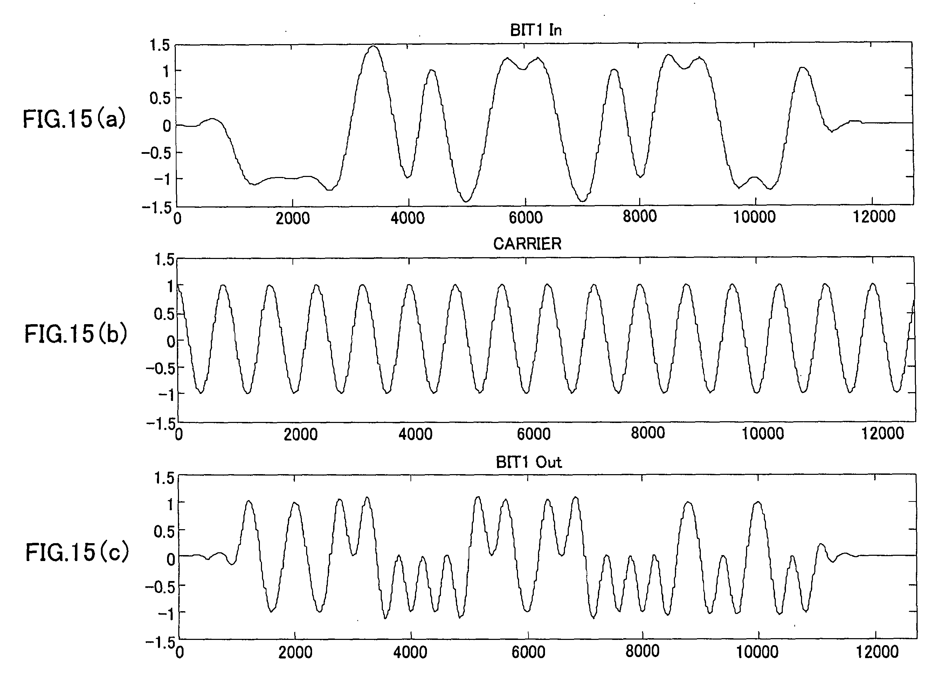

What is important in the present invention is whether or not it is possible to allocate a Nyquist wave to 1/2 of the symbol period. This is confirmed with the primary modulation. FIG.15 shows simulation results for confirming this. FIG.15 (a) shows a symbol input (after Nyquist shaping), FIG. 15 (b) shows a primary modulation carrier and FIG.15(c) shows a primary modulation output signal. These correspond to one of the I-axis or Q-axis. It is observed from the Nyquist input in FIG.15 (a) and the primary modulation output in FIG.15(c) that signal points of the Nyquist wave are reliably expressed.

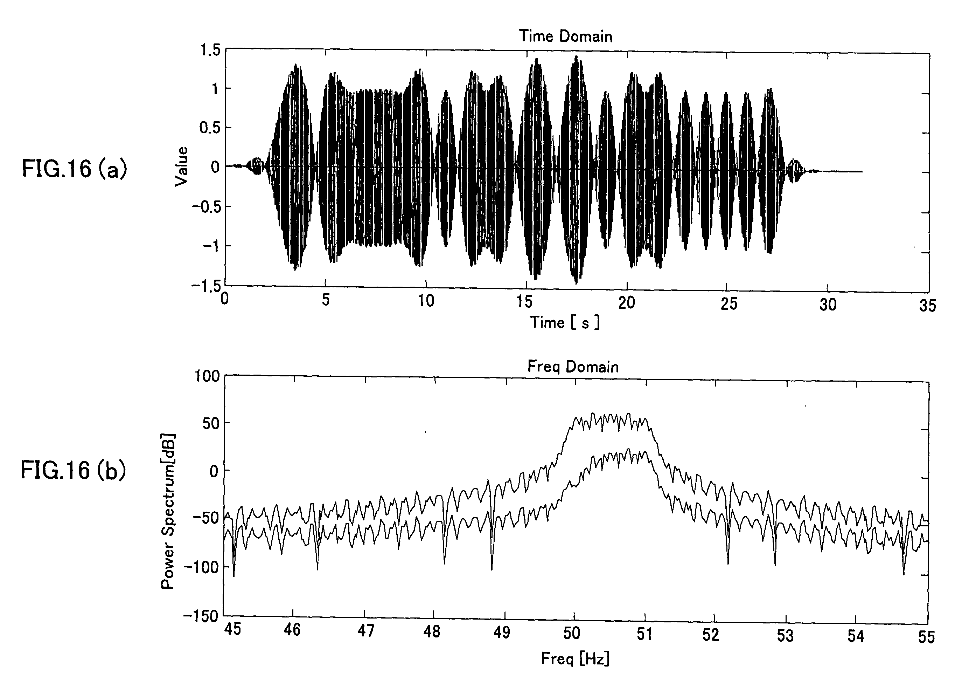

FIG.16 shows spectra representing the secondary modulation output wave and bandwidth thereof. In the secondary modulation, the I-axis component and Q-axis component are combined through quadrature modulation and four types of envelopes are combined (FIG.16(a)). Furthermore, it is observed from the spectrum (FIG.16 (b)) that the bandwidth is 1 Hz. Since the simulation is conducted assuming that the input symbol period is 1 sec (Nyquist wave period: 0.5 Hz), the fact that double side waves are produced through the modulation resulting in 1Hz/-3 dB proves that the theory is correct.

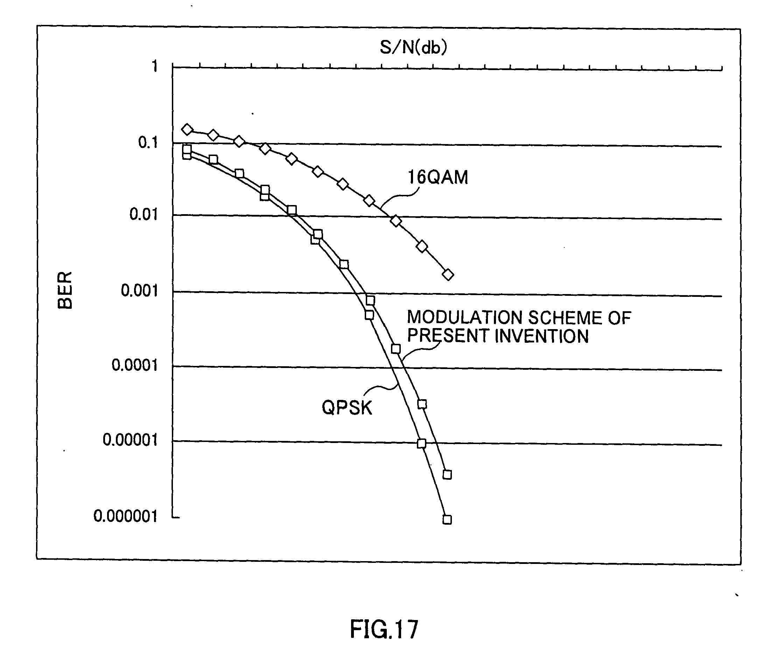

Next, that the communication quality of the modulation scheme of the present invention excels that of 16QAM is a major premise of improvement of the frequency utilization efficiency. FIG.17 shows a BER vs. S/N simulation result in the AWGN environment. This simulation result proves that the modulation scheme of the present invention displays a BER substantially equivalent to that of QPSK and has an excellent S/N characteristic of 4 dB or more even at point $10^{-2}$ compared to 16QAM having an equivalent transmission rate.

Thus, this embodiment provides first and second quadrature modulators 109, 110 that receive Nyquist signals each having a delay difference corresponding to 1/2(2/4) of the symbol period and apply quadrature modulation to the input Nyquist signals using a cosine wave having a frequency corresponding to an odd-number multiple of the basic frequency of each Nyquist signal as a carrier and third quadrature modulator 113 that applies quadrature modulation to the modulated signal obtained from first quadrature modulator 109 and the modulated signal obtained from second quadrature modulator 110 using a carrier of a predetermined frequency, and can thereby realize modulation apparatus 100 capable of forming a modulated signal accommodating twice as many symbols as the conventional symbols without expanding the bandwidth.

(Embodiment 2)

In Embodiment 1 described above, the amount of information that can be transmitted for a 1-symbol period is 4 bits. This is equivalent to conventional 16QAM. On the other hand, there is a conventional modulation scheme intended to realize further multi-values such as 64QAM. This embodiment proposes a method that further improves efficiency through a modulation scheme and corresponds to the conventional multi-values.

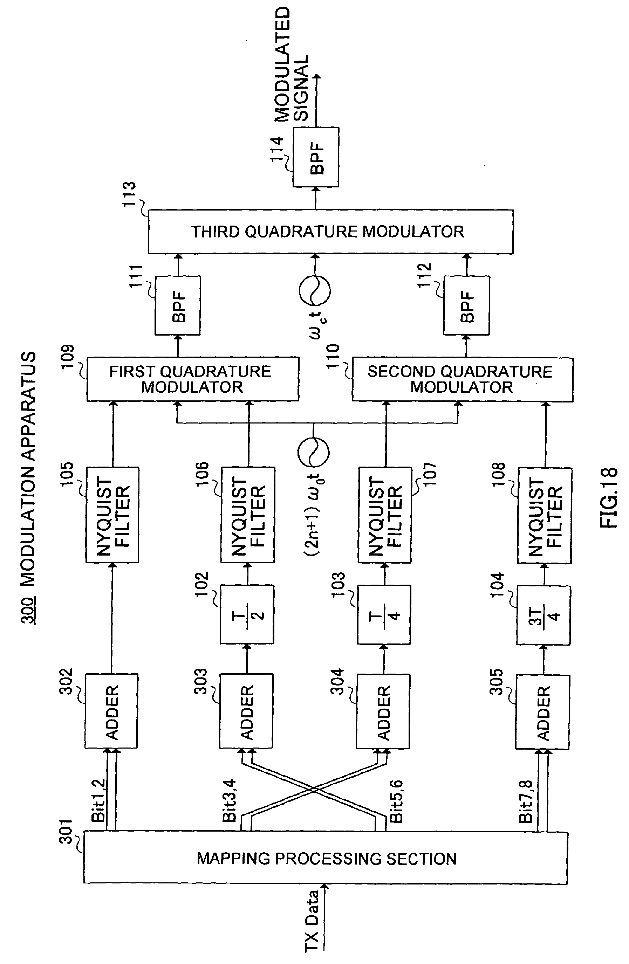

FIG.18 shows the configuration of a modulation apparatus according to Embodiment 2 of the present invention. In FIG.18, components corresponding to those in FIG.12 are assigned the same reference numerals and explanations thereof will be omitted. Modulation apparatus 300 inputs transmission data (TXData) to mapping processing section 301. Mapping processing section 301 applies mapping processing mainly consisting of parallelization processing and error correcting coding to the transmission data (TXData). Mapping processing section 301 sends the first bit and second bit after the processing to adder 302, the third bit and fourth bit to an adder 304, the fifth bit and sixth bit to an adder 303 and the seventh bit and eighth bit to an adder 305.

Adders 302 to 305 add up the 2 bit input signals and therby integrate the 2 bit signals. The output of adder 302 is sent to Nyquist filter 105 and the outputs of the other adders 303 to 305 are sent to Nyquist filters 106 to 108 through delayers 102 to 104. This causes each Nyquist signal output from each Nyquist filter 105 to 108 to have 2-bit information per wave. The subsequent processing is the same as that in FIG.12.

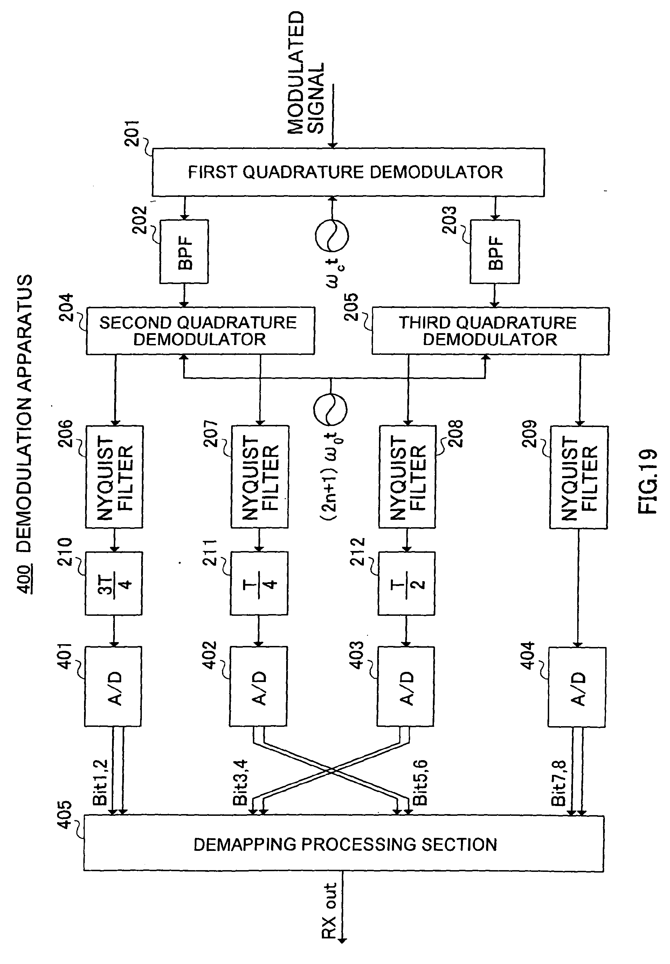

FIG.19 shows the configuration of demodulation apparatus 400 that demodulates a modulated signal formed by modulation apparatus 300. Demodulation apparatus 400 is provided on the receiving side of the radio communication system. In FIG.19, components corresponding to those in FIG.14 are assigned the same reference numerals and explanations thereof will be omitted. Demodulation apparatus 400 has the same configuration as that of demodulation apparatus 200 in FIG.14 except that it includes analog and digital converters (A/D) 401 to 404 that perform analog and digital conversion to a Nyquist signal and a demapping processing section 405.

The respective analog and digital conversion circuits 401 to 404 decide against a threshold the Nyquist signals output from Nyquist filters 206 to 209 and thereby obtain 2-bit information. Demapping processing section 405 applies demapping processing mainly consisting of serialization processing and error correcting decoding processing to the eight lines of input bits and obtains received data (RXout).

Thus, in addition to the configuration of Embodiment 1, the conversion of Nyquist signals themselves into multi-valued signals according to this embodiment makes it possible to transmit twice as much data as that of Embodiment 1 in the same frequency band and further improving the frequency utilization efficiency.

(Embodiment 3)

In Embodiment 1 shown in FIG.12 and Embodiment 2 shown in FIG.18, after transmission data converted to parallel signals are symbol-allocated to phase points obtained by dividing a symbol segment into four equal portions, that is, after the parallel signals are allocated at the positions of phase 0, phase π/2, phase n, phase 3n/2, the symbols of phase 0 and phase n are subjected to quadrature modulation through primary modulation and at the same time symbols of phase π/2 and phase 3n/2 are subjected to quadrature modulation. That is, a symbol signal having phase difference n (that is, delay difference corresponding to 1/2 of symbol period) is subjected to primary modulation.

As a result, the receiving side carries out quadrature demodulation of phase difference n/2 at a first stage, but quadrature demodulation in an environment with a violent dynamic variation is likely to produce greater inter-phase errors than demodulation of phase difference n and considered to be vulnerable to interference between codes and distortion in transmission. For this reason, this embodiment supposes that first and second quadrature modulations handle symbols in a relationship with a phase difference n/2 (that is, delay difference corresponding to 1/4 of symbol period).

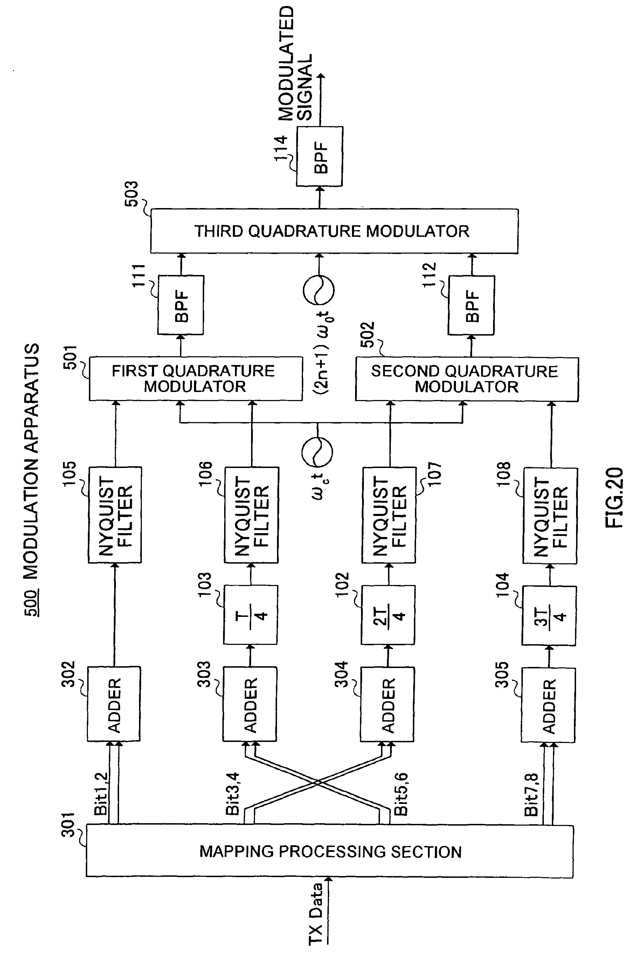

FIG.20 in which components corresponding to those in FIG.18 are shown assigned the same reference numerals shows the configuration of modulation apparatus 500 according to Embodiment 3 of the present invention. As described above, first and second quadrature modulators 501 and 502 input Nyquist signals having a delay difference corresponding to 1/4 of the symbol period and carry out normal quadrature modulation with phase difference π/2, and therefore the carrier frequency for use is supposed to be ωc. On the other hand, third quadrature modulator 503 carries out a combination with phase difference n, and therefore the carrier frequency for use is supposed to be (2n+1)ωo. In this case, in order to assure the interference reduction effect at a symbol half period point with (2n+1)ωO, ωC should be set to a frequency of an even-number multiple of ωO.

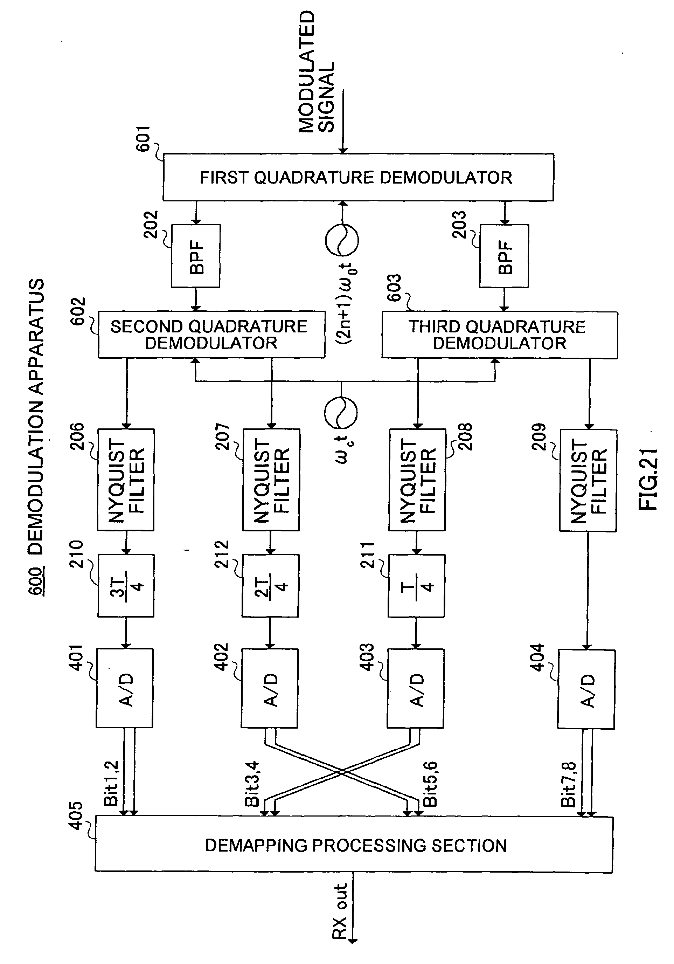

FIG.21 in which components corresponding to those in FIG.19 are shown assigned the same reference numerals shows the configuration of demodulation apparatus 600 according to Embodiment 3 of the present invention. Demodulation apparatus 600 is provided on the receiving side and demodulates a modulated signal modulated and transmitted by modulation apparatus 500 provided on the transmitting side.

Demodulation apparatus 600 sets the carrier frequency used at first quadrature demodulator 601 to (2n+1)ωo. On the other hand, second and third quadrature demodulators 602 and 603 carry out normal quadrature demodulation of phase difference n/2 and therefore the carrier frequency used is set to ωC.

Thus, in addition to the effects of Embodiment 1 and Embodiment 2, the modulation scheme of this embodiment can realize a modulation scheme more resistant to interference between codes and distortion in transmission.

This embodiment has described the case where Nyquist signals having a delay difference corresponding to 1/4 of the symbol period are subjected to primary modulation with a predetermined carrier frequency $\omega_C$ and two lines of signals obtained through the primary modulation are subjected to secondary modulation using a cosine wave of a frequency corresponding to an odd-number multiple of the basic frequency of each Nyquist signal as a carrier. However, the delay difference is not limited to the 1/4 period and may be a 3/4 period and the point is that signals having a delay difference corresponding to an odd-number multiple of the 1/4 of the symbol period are subjected to primary modulation.

(Embodiment 4)

This embodiment will explain a case where a quadrature modulator that carries out quadrature modulation using a cosine wave having a frequency corresponding to an odd-number multiple of the basic frequency of a Nyquist signal as a carrier is realized in another configuration. The basic principle is the same as those in Embodiments 1 to 3.

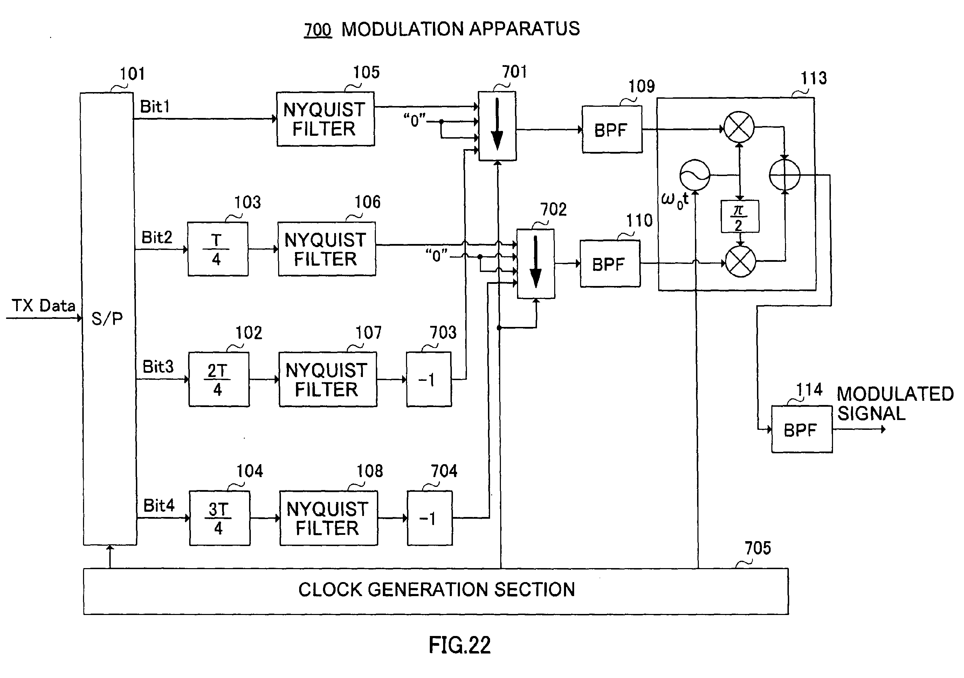

In FIG. 22 in which components corresponding to those in FIG.12 are shown assigned the same reference numerals, modulation apparatus 700 according to this embodiment is provided with shift registers 701, 702 as first and second modulators carrying out primary modulation. Inverters 703 and 704 of the modulation apparatus 700 invert the polarity of one of two lines of Nyquist signals input to shift registers 701 and 702. In the case of this embodiment, the polarities of Bit3 and Bit4 are inverted.

This enables modulation apparatus 700 not only to acquire positive signal Bit1 of the I-axis and negative signal Bit3 of the I-axis but also acquire positive signal Bit2 of the Q-axis and negative signal Bit4 of the Q-axis.

Thus obtained positive signal Bit1 of the I-axis and negative signal Bit3 of the I-axis are input to shift register 701 and along with that, positive signal Bit2 of the Q-axis and negative signal Bit4 of the Q-axis are input to shift register 702.

Shift register 701 inserts 0 in positive signal Bit1 of the I-axis and negative signal Bit3 of the I-axis and sequentially outputs them on a clock corresponding to an odd-number multiple of the symbol period. Likewise, shift register 702 inserts 0 in positive signal Bit2 of the Q-axis and negative signal Bit4 of the Q-axis and sequentially outputs them on a clock corresponding to an odd-number multiple of the symbol period.

That is, shift registers 701 and 702 receive Nyquist signals having a delay difference corresponding to an integer multiple of 1/4 of the symbol period (1/2 of symbol period in the case of this embodiment) and output the input Nyquist signals at a frequency corresponding to an odd-number multiple of the basic frequency of each Nyquist signal alternately.

This processing is equivalent to quadrature modulation on the Nyquist signal of the first input symbol and the Nyquist signal of the second input symbol having a delay difference corresponding to an integer multiple of 1/4 of the symbol period of the input symbol with respect to the Nyquist signal of the first input symbol using a cosine wave having a frequency corresponding to an odd-number multiple of the basic frequency of each Nyquist signal as a carrier.

Serial/parallel converter (S/P) 101, shift registers 701 and 702 and quadrature modulator 113 operate respectively according to clock signals from clock generation section 705 that generates independent clock signals.

As a result, modulation outputs having 2-bit symbols of the I-axis and Q-axis are obtained independently from band pass filter 114 as shown in FIG.6.

The present invention is not limited to the above described embodiments, but can be implemented modified in various ways.

A mode of the modulation method of the present invention is a modulation method of applying quadrature modulation to a first input symbol and a second input symbol and applies quadrature modulation to a Nyquist signal of the first input symbol and a Nyquist signal of the second input symbol obtained by giving a delay difference corresponding to an integer multiple of 1/4 of the symbol period of the input symbol to the Nyquist signal of the first input symbol using a cosine wave having a frequency corresponding to an odd-number multiple of the basic frequency of each Nyquist signal as a carrier.

According to this method, the first and second Nyquist signals having a delay difference corresponding to an integer multiple of 1/4 of the input symbol period T are subjected to quadrature modulation using a cosine wave (carrier), and therefore the first and second Nyquist signals can be accommodated in a 1-symbol period T of the input symbol without any interference with each other. However, this alone causes signals to have a DC component, and therefore when secondary modulation is applied, the frequency bandwidth eventually expands to a double width. For this reason, a frequency corresponding to an odd-number multiple of the basic frequency of each Nyquist signal is selected for the above described cosine wave. As a result, it is possible to allocate symbol points of Nyquist waves at intervals of T/2 without any interference with each other. That is, it is possible to create two Nyquist waves having such a relationship that when one Nyquist wave becomes a maximum, the other Nyquist wave becomes a null point at intervals of T/2. This makes it possible to form a modulated signal accommodating twice as many symbols as the conventional symbols without expanding the bandwidth.

Furthermore, another mode of the modulation method of the present invention includes a step of giving a delay difference corresponding to 1/4 of the symbol period to each of four lines of input symbols and Nyquist-shaping the symbols to obtain first to fourth Nyquist signals having a delay difference corresponding to 1/4 of the symbol period, a primary modulation step of carrying out quadrature modulation on first and second Nyquist signals having a delay difference corresponding to 2/4 of the symbol period and on third and fourth Nyquist signals having a delay difference corresponding to 2/4 of the symbol period using a cosine wave having a frequency corresponding to an odd-number multiple of the basic frequency of each Nyquist signal as a carrier and a secondary modulation step of carrying out quadrature modulation on the signal resulting from quadrature modulation of the first and second Nyquist signals and the signal resulting from quadrature modulation of the third and fourth Nyquist signals obtained in said primary modulation step using a carrier of a predetermined frequency.

In addition, a further mode of the modulation method of the present invention includes a step of giving a delay difference corresponding to 1/4 of the symbol period to each of four lines of input symbols and Nyquist-shaping the symbols to thereby obtain first to fourth Nyquist signals having a delay difference corresponding to 1/4 of the symbol period, a primary modulation step of carrying out quadrature modulation on the first and second Nyquist signals having a delay difference corresponding to 1/4 of the symbol period and the third and fourth Nyquist signals having a delay difference corresponding to 1/4 of the symbol period using a carrier having a predetermined frequency and a secondary modulation step of carrying out quadrature modulation on the signal resulting from quadrature modulation of the first and second Nyquist signals and the signal resulting from quadrature modulation of the third and fourth Nyquist signals obtained in the primary modulation step using a cosine wave having a frequency corresponding to an odd-number multiple of the basic frequency of each Nyquist signal as a carrier.

According to these methods, the frequency band of the modulated signal obtained in the secondary modulation step is less expanded than when two Nyquist signals are simply subjected to quadrature modulation and the first to fourth Nyquist signals of the first to fourth input symbols are allocated without any interference with one another. Therefore, it is possible to obtain a modulated signal with twice as many symbols as conventional symbols allocated in the same frequency band as the conventional one without interference.

A mode of the modulation apparatus of the present invention comprises a quadrature modulator that inputs a first Nyquist signal of a first input symbol and a second Nyquist signal of a second input symbol having a delay difference corresponding to an integer multiple of 1/4 of the input symbol period with respect to the Nyquist signal of the first input symbol and carries out quadrature modulation on the first and second Nyquist signals with a cosine wave having a frequency corresponding to an odd-number multiple of the basic frequency of each Nyquist signal.

According to this configuration, the first and second Nyquist signals having a delay difference corresponding to an integer multiple of 1/4 of the input symbol period T are subjected to quadrature modulation using a cosine wave (carrier), and therefore it is possible to accommodate the first and second Nyquist signals in a 1-symbol period T of the input symbol without any interference with each other. In addition, the frequency of the above described cosine wave is selected as an odd-number multiple of the basic frequency of each Nyquist signal, and therefore the DC component is suppressed, preventing the substantial frequency band from expanding even whensecondary modulationiscarriedout. Therefore, it is possible to form a modulated signal accommodating twice as many symbols as conventional symbols without expanding the bandwidth.

Furthermore, another mode of the modulation apparatus of the present invention comprises a group of delayers that give a delay difference corresponding to 1/4 of the symbol period to each of four lines of input symbols, Nyquist filters that form Nyquist signals from the four lines of symbols, first and second quadrature modulators that input Nyquist signals having a delay difference corresponding to 2/4 of the symbol period respectively and apply quadrature modulation to the input Nyquist signals using a cosine wave of a frequency corresponding to an odd-number multiple of the basic frequency of each Nyquist signal as a carrier and a third quadrature modulator that carries out quadrature modulation using the modulated signal obtained from the first quadrature modulator and the modulated signal obtained from the second quadrature modulator with a carrier having a predetermined frequency.

Furthermore, a still further mode of the modulation apparatus of the present invention comprises a group of delayers that give a delay difference corresponding to 1/4 of the symbol period to each of four lines of input symbols, Nyquist filters that form Nyquist signals from the four lines of symbols, first and second quadrature modulators that input Nyquist signals having a delay difference corresponding to an odd-number multiple of 1/4 of the symbol period respectively and apply quadrature modulation using a carrier of a predetermined frequency and a third quadrature modulator that carries out quadrature modulation using the modulated signal obtained from the first quadrature modulator and the modulated signal obtained from the second quadrature modulator with a cosine wave having a frequency corresponding to an odd-number multiple of the basic frequency of each Nyquist signal as a carrier.

According to these configurations, the first quadrature modulator obtains a modulated signal with two Nyquist signals allocated in a 1-symbol period T without any interference with each other and the second quadrature modulator obtains a modulated signal with two Nyquist signals allocated in a 1-symbol period T without any interference with each other. In addition, the third quadrature modulator obtains a modulated signal with four Nyquist signals allocated in a 1-symbol period T without any interference with one another. As a result, it is possible to form a modulated signal accommodating twice as many symbols as conventional symbols without expanding the bandwidth.

Furthermore, a still further mode of the modulation apparatus of the present invention comprises a group of delayers that give a delay difference corresponding to 1/4 of the symbol period to each of four lines of input symbols, Nyquist filters that form Nyquist signals from the four lines of symbols, first and second quadrature modulators that input Nyquist signals having a delay difference corresponding to an integer multiple of 1/4 of the symbol period and output the input Nyquist signals at a frequency corresponding to an odd-number multiple of the basic frequency of each Nyquist signal alternately and a third quadrature modulator that carries out quadrature modulation using the modulated signal obtained from the first quadrature modulator and the modulated signal obtained from the second quadrature modulator with a carrier having a predetermined frequency.

According to this configuration, it is possible to form a modulated signal accommodating twice as many symbols as conventional symbols without expanding the bandwidth and constitute the first and second quadrature modulators with switching elements and shift registers and suchlike.

A mode of the demodulation apparatus of the present invention comprises a quadratured demodulator that carries out quadrature demodulation on a modulated signal obtained by carrying out quadrature modulation on first and second Nyquist signals using a cosine wave having a frequency corresponding to an odd-number multiple of the basic frequency of each Nyquist signal.

Furthermore, another mode of the demodulation apparatus of the present invention comprises a first quadrature demodulator that receives a modulated signal and carries out quadrature demodulation on this modulated signal using a predetermined carrier frequency to obtain first and second demodulated signals, a second quadrature demodulator that carries out quadrature demodulation on the first demodulated signal using a cosine wave having a frequency corresponding to an odd-number multiple of the basic frequency of each Nyquist signal to obtain third and fourth demodulated signals and a third quadrature demodulator that carries out quadrature demodulation on the second demodulated signal using a cosine wave having a frequency corresponding to an odd-number multiple of the basic frequency of each Nyquist signal to obtain fifth and sixth demodulated signals.

Furthermore, a further mode of the demodulation apparatus of the present invention comprises a first quadrature demodulator that receives a modulated signal and carries out quadrature demodulation on this modulated signal using a cosine wave having a frequency corresponding to an odd-number multiple of the basic frequency of each Nyquist signal to obtain first and second demodulated signals, a second quadrature demodulator that carries out quadrature demodulation on the first demodulated signal using a predetermined carrier frequency to obtain third and fourth demodulated signals and a third quadrature demodulator that carries out quadrature demodulation on the second demodulated signal using a predetermined carrier frequency to obtain fifth and sixth demodulated signals.

According to these configurations, it is possible to demodulate the modulated signals formed satisfactorily using the modulation apparatus of the present invention and obtain demodulated signals.

A radio communication system according to the present invention comprises the above described modulation apparatus and the above described demodulation apparatus.

According to this configuration, it is possible to realize a radio communication system capable of communicating at a transmission rate twice as much as the conventional transmission rate in the same conventional frequency band.

As explained so far, the present invention can realize a modulation scheme with frequency utilization efficiency more than twice the conventional frequency utilization efficiency.

This application is based on Japanese Patent Application No.2003-35750 filed on February 13, 2003, Japanese Patent Application No.2003-136610 filed on May 14, 2003 and Japanese Patent Application No.2003-382985 filed on November 12, 2003, entire content of which is expressly incorporated by reference herein.

Industrial Applicability

The present invention is widely applicable to a radio communication and suitable for use in, for example, a cellular phone and base station thereof, etc.

[FIG.1]
I-AXIS SIGNAL (+1)
Q-AXIS SIGNAL (+1)
I-AXIS SIGNAL (-1)
Q-AXIS SIGNAL (-1)

[FIG.2]
PRECEDING SIGNAL POINT
FOLLOWING SIGNAL POINT
PRECEDING SIGNAL PERIOD
FOLLOWING SIGNAL PERIOD

[FIG.4]
NYQUIST WAVE INSERTED AT T/2
INTERFERENCE OCCURS BECAUSE THIS IS NOT NULL
NYQUIST WAVE INSERTED AT T/2
BECOMES NULL

[FIG.6]
ROTATION FOR LINKING SIGNAL POINTS

[FIG.9]
I-AXIS (POSITIVE)
Q-AXIS (POSITIVE)
I-AXIS (NEGATIVE)
Q-AXIS (NEGATIVE)

[FIG.10]
I-AXIS (POSITIVE)
Q-AXIS (POSITIVE)
ONE MORE SYMBOL CAN BE ALLOCATED FOR EACH AXIS BY CARRYING OUT PRIMARY MODULATION
I-AXIS (NEGATIVE)

Q-AXIS (NEGATIVE)
S-AXIS (NEGATIVE)
T-AXIS (NEGATIVE)
THESE FOUR AXES ARE INDEPENDENT FROM ONE ANOTHER AND CONSTELLATION MADE UP OF THESE
AXES BECOMES FOUR-DIMENSIONAL

[FIG.11]
I-AXIS SIGNAL
I-AXIS SIGNAL WITH T/2 DELAY
NOT NULL BETWEEN I, Q
NULL BETWEEN "I"S

[FIG.12]
100 MODULATION APPARATUS
105 NYQUIST FILTER
106 NYQUIST FILTER
107 NYQUIST FILTER
108 NYQUIST FILTER
MODULATED SIGNAL

[FIG.13]
I-Q COMBINED OUTPUT
Q-AXIS MODULATION OUTPUT
I-AXIS MODULATION OUTPUT

[FIG.14]
200 DEMODULATION APPARATUS
206 NYQUIST FILTER
207 NYUIST FILTER
209 NYQQUIST FILTER
208 NYQUIST FILTER
MODULATED SIGNAL

[FIG.17]
MODULATION SCHEME OF PRESENT INVENTION

[FIG.18]
300 MODULATION APPARATUS
301 MAPPING PROCESSING SECTION
302 ADDER
303 ADDER
304 ADDER
305 ADDER
105 NYQUIST FILTER
106 NYQUIST FILTER
107 NYQUIST FILTER
108 NYQUIST FILTER109 FIRST QUADRATURE MODULATOR
110 SECOND QUADRATURE MODULATOR
113 THIRD QUADRATURE MODULATOR
MODULATED SIGNAL

[FIG.19]
400 DEMODULATION APPARATUS
405 DEMAPPING PROCESSING SECTION
206 NYQUIST FILTER
207 NYQUIST FILTER
208 NYQUIST FILTER
209 NYQUIST FILTER

204 SECOND QUADRATURE DEMODULATOR
205 THIRD QUADRATURE DEMODULATOR
201 FIRST QUADRATURE DEMODULATOR
MODULATED SIGNAL

[FIG.20]
500 MODULATION APPARATUS
301 MAPPING PROCESSING SECTION
302 ADDER
303 ADDER
304 ADDER
305 ADDER
105 NYQUIST FILTER
106 NYQUIST FILTER
107 NYQUIST FILTER
108 NYQUIST FILTER
501 FIRST QUADRATURE MODULATOR
502 SECOND QUADRATURE MODULATOR
503 THIRD QUADRATURE MODULATOR
MODULATED SIGNAL

[FIG.21]
600 DEMODULATION APPARATUS
405 DEMAPPING PROCESSING SECTION
206 NYQUIST FILTER
207 NYQUIST FILTER
208 NYQUIST FILTER
209 NYQUIST FILTER
602 SECOND QUADRATURE DEMODULATOR
603 THIRD QUADRATURE DEMODULATOR
601 FIRST QUADRATURE DEMODULATOR
MODULATED SIGNAL

[FIG.22]
700 MODULATION APPARATUS
105 NYQUIST FILTER
106 NYQUIST FILTER
107 NYQUIST FILTER
108 NYQUIST FILTER
MODULATED SIGNAL
705 CLOCK GENERATION SECTION

**Claims**

1. A modulation method of applying quadrature modulation to a first input symbol and a second input symbol, comprising a step of applying quadrature modulation to a Nyquist signal of said first input symbol and a Nyquist signal of said second input symbol obtained by giving a delay difference corresponding to an integer multiple of 1/4 of the symbol period of said input symbol to the Nyquist signal of said first input symbol using a cosine wave having a frequency corresponding to an odd-number multiple of the basic frequency of each said Nyquist signal as a carrier.

2. The modulation method according to claim 1, comprising:

   a setp of giving a delay difference corresponding to 1/4 of the symbol period to each of four lines of input symbols and Nyquist-shaping the symbols to obtain first to fourth Nyquist signals having a delay difference corresponding to 1/4 of the symbol period;
   a primary modulation step of carrying out quadrature modulation on first and second Nyquist signals having a delay difference corresponding to 2/4 of the symbol period and on third and fourth Nyquist signals having a delay difference corresponding to 2/4 of the symbol period using a cosine wave having a frequency corresponding to an odd-number multiple of the basic frequency of each said Nyquist signal as a carrier; and

a secondary modulation step of carrying out quadrature modulation on the signal resulting from quadrature modulation of said first and second Nyquist signals and the signal resulting from quadrature modulation of said third and fourth Nyquist signals obtained in said primary modulation step using a carrier of a predetermined frequency.

3. The modulation method according to claim 1, comprising: a step of giving a delay difference corresponding to 1/4 of the symbol period to each of four lines of input symbols and Nyquist-shaping the symbols to thereby obtain first to fourth Nyquist signals having a delay difference corresponding to 1/4 of the symbol period;

a primary modulation step of carrying out quadrature modulation on the first and second Nyquist signals having a delay difference corresponding to 1/4 of the symbol period and the third and fourth Nyquist signals having a delay difference corresponding to 1/4 of the symbol period using a carrier having a predetermined frequency; and

a secondary modulation step of carrying out quadrature modulation on the signal resulting from quadrature modulation of said first and second Nyquist signals and the signal resulting from quadrature modulation of said third and fourth Nyquist signals obtained in said primary modulation step using a cosine wave having a frequency corresponding to an odd-number multiple of the basic frequency of each saidNyquist signal as a carrier.

4. A modulation apparatus comprising a quadrature modulator that inputs a first Nyquist signal of a first input symbol and a second Nyquist signal of a second input symbol having a delay difference corresponding to an integer multiple of 1/4 of the input symbol period with respect to the Nyquist signal of said first input symbol and carries out quadrature modulation on the first and second Nyquist signals using a cosine wave having a frequency corresponding to an odd-number multiple of the basic frequency of each Nyquist signal.

5. The modulation apparatus according to claim 4, comprising:

a group of delayers that give a delay difference corresponding to 1/4 of the symbol period to each of four lines of input symbols;

Nyquist filters that form Nyquist signals from said four lines of symbols;

first and second quadrature modulators that input Nyquist signals having a delay difference corresponding to 2/4 of the symbol period respectively and apply quadrature modulation to the input Nyquist signals using a cosine wave of a frequency corresponding to an odd-number multiple of the basic frequency of each said Nyquist signal as a carrier; and

third quadrature modulator that carries out quadrature modulation using the modulated signal obtained from said first quadrature modulator and the modulated signal obtained from said second quadrature modulator with a carrier having a predetermined frequency.

6. The modulation apparatus according to claim 4, comprising:

a group of delayers that give a delay difference corresponding to 1/4 of the symbol period to each of four lines of input symbols;

Nyquist filters that form Nyquist signals from said four lines of symbols;

first and second quadrature modulators that input Nyquist signals having a delay difference corresponding to an odd-number multiple of 1/4 of the symbol period respectively and apply quadrature modulation using a carrier of a predetermined frequency; and

a third quadrature modulator that carries out quadrature modulation using the modulated signal obtained from said first quadrature modulator and the modulated signal obtained from said second quadrature modulator with a cosine wave having a frequency corresponding to an odd-number multiple of the basic frequency of each said Nyquist signal as a carrier.

7. A modulation apparatus comprising:

a group of delayers that give a delay difference corresponding to 1/4 of the symbol period to each of four lines of input symbols;

Nyquist filters that form Nyquist signals from said four lines of symbols;

first and second quadrature modulators that input Nyquist signals having a delay difference corresponding to an integer multiple of 1/4 of the symbol period and output the input Nyquist signals at a frequency corresponding to an odd-number multiple of the basic frequency of each said Nyquist signal alternately; and
a third quadrature modulator that carries out quadrature modulation using the modulated signal obtained from said first quadrature modulator and the modulated signal obtained from said second quadrature modulator with a carrier having a predetermined frequency.

8. A demodulation apparatus comprising a quadrature demodulator that carries out quadrature demodulation on a modulated signal obtained by carrying out quadrature modulation on first and second Nyquist signals using a cosine wave having a frequency corresponding to an odd-number multiple of the basic frequency of each said Nyquist signal.

9. The demodulation apparatus according to claim 8, comprising:

a first quadrature demodulator that receives a modulated signal and carries out quadrature demodulation on the modulated signal using a predetermined carrier frequency to obtain first and second demodulated signals;
a second quadrature demodulator that carries out quadrature demodulation on said first demodulated signal using a cosine wave having a frequency corresponding to an odd-number multiple of the basic frequency of each said Nyquist signal to obtain third and fourth demodulated signals; and
a third quadrature demodulator that carries out quadrature demodulation on said second demodulated signal using a cosine wave having a frequency corresponding to an odd-number multiple of the basic frequency of each said Nyquist signal to obtain fifth and sixth demodulated signals.

10. The demodulation apparatus according to claim 8, comprising:

a first quadrature demodulator that inputs a modulated signal and carries out quadrature demodulation on the modulated signal using a cosine wave having a frequency corresponding to an odd-number multiple of the basic frequency of each said Nyquist signal to obtain first and second demodulated signals;
a second quadrature demodulator that carries out quadrature demodulation on said first demodulated signal using a predetermined carrier frequency to obtain third and fourth demodulated signals; and
a third quadrature demodulator that carries out quadrature demodulation on said second demodulated signal using a predetermined carrier frequency to obtain fifth and sixth demodulated signals.

11. A radio communication system comprising the modulation apparatus according to claim 4 and the demodulation apparatus according to claim 8.

12. A radio communication system comprising the modulation apparatus according to claim 5 and the demodulation apparatus according to claim 9.

13. A radio communication system comprising the modulation apparatus according to claim 6 and the demodulation apparatus according to claim 10.

FIG.1 (PRIOR ART)

FIG.2 (PRIOR ART)

EP 1 617 612 A1

FIG.3

FIG.4

FIG.5

FIG.6

EP 1 617 612 A1

FIG.7

FIG.8

EP 1 617 612 A1

FIG.9

FIG.10

FIG.11

FIG.12

EP 1 617 612 A1

bit-#1
bit-#2
bit-#3
bit-#4

$t_1$   $t_2$   $t_3$   $t_4$   $t_{1'}$

I-Q COMBINED OUTPUT

Q-AXIS MODULATION OUTPUT

0

t

I-AXIS MODULATION OUTPUT

T

FIG.13

FIG.14

EP 1 617 612 A1

FIG.15(a) — BIT1 In

FIG.15(b) — CARRIER

FIG.15(c) — BIT1 Out

EP 1 617 612 A1

FIG.16 (a)

Time Domain

FIG.16 (b)

Freq Domain

EP 1 617 612 A1

FIG.17

EP 1 617 612 A1

## 300 MODULATION APPARATUS

FIG.18

EP 1 617 612 A1

## 400 DEMODULATION APPARATUS

FIG.19

EP 1 617 612 A1

FIG.20

EP 1 617 612 A1

## 600 DEMODULATION APPARATUS

FIG.21

EP 1 617 612 A1

FIG.22

## INTERNATIONAL SEARCH REPORT

| International application No. |
| --- |
| PCT/JP2004/006860 |

**A. CLASSIFICATION OF SUBJECT MATTER**
Int.Cl$^7$  H04L27/18, H04B14/02

According to International Patent Classification (IPC) or to both national classification and IPC

**B. FIELDS SEARCHED**

Minimum documentation searched (classification system followed by classification symbols)
Int.Cl$^7$  H04L27/00-27/38, H04B14/02

Documentation searched other than minimum documentation to the extent that such documents are included in the fields searched

| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 08-149169 A  (Matsushita Electric Industrial Co., Ltd.), 07 June, 1996 (07.06.96), Par. Nos. [0025] to [0033]; Figs. 1, 5, 6 (Family: none) | 8 |
| Y | JP 04-177946 A  (Sony Corp.), 25 June, 1992 (25.06,92), Fig. 2 & US 5172070 A | 8 |
| A | JP 04-501042 A  (Motorola, Inc.), 20 February, 1992 (20.02.92), Fig. 2 & US 4816783 A            & WO 89/06460 A & EP 400027 A               & EP 400027 B1 & DE 3853782 G              & CA 1314080 C | 1-13 |

☒ Further documents are listed in the continuation of Box C.        ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 June, 2004 (09.06.04) | 29 June, 2004 (29.06.04) |

| Name and mailing address of the ISA/ Japanese Patent Office | Authorized officer |
| --- | --- |
| Facsimile No. | Telephone No. |

Form PCT/ISA/210 (second sheet) (January 2004)

**INTERNATIONAL SEARCH REPORT**

International application No.

PCT/JP2004/006860

C (Continuation). DOCUMENTS CONSIDERED TO BE RELEVANT

| Category* | Citation of document, with indication, where appropriate, of the relevant passages | Relevant to claim No. |
|---|---|---|
| A | DEBABRATA SAHA, THEODORE G.BIRDSALL, "Quadrature-Quadrature Phase-Shift Keying", IEEE TRANSACTIONS ON COMMUNICATIONS, Vol.37, No.5, May 1989, pages 437 to 448 | 1-13 |

Form PCT/ISA/210 (continuation of second sheet) (January 2004)